# EUROPEAN PATENT SPECIFICATION

(11) **EP 3 456 935 B1**
(45) Date of publication and mention of the grant of the patent: **25.03.2020**
(21) Application number: 17290118.3
(22) Date of filing: 15.09.2017
(51) Int. Cl.: F01N 3/20

(54) **ARRANGEMENT WITH A HOUSING**
ANORDNUNG MIT EINEM GEHÄUSE
ENSEMBLE COMPRENANT UN BOÎTIER

(43) Date of publication of application: 20.03.2019
(73) Proprietor: MEAS France, 31027 Toulouse Cedex 3 (FR)
(72) Inventor: Durupt, Emilien, F-31460 Francarville (FR); Gaunard, Florent, F-31500 Toulouse (FR)
(74) Representative: Patentanwaltskanzlei WILHELM & BECK

(56) References cited:
- WO-A1-2013/135486
- WO-A1-2016/137217
- DE-A1-102016 001 473

## Description

The invention refers to an arrangement with a housing, especially to an arrangement with a housing for an element especially a sensor or an actuator.

In the state of the art, housings for sensors or actuators are well known. Depending on aggressive ambient conditions, the housing itself and also elements within the housing may be negatively affected.

WO 2016/137217 A1 discloses a flange structure which comprises: a flange member, which is installed on one side of the interior of a tank so as to install a pump in the tank in order to discharge a liquid stored in the tank to the outside of the tank, wherein the pump is installed on one side thereof, and comprises an accommodation part, in which a PCB is accommodated, on the other side thereof; and a flange cover coupled to the flange member so as to seal the PCB, wherein a first discharge tube of the pump installed on the flange member extends toward the flange cover and is connected to a second discharge tube formed on the other side of the flange member outside the tank.

DE 10 2016 001 473 A1 discloses a tank for reducing agent with a tank conveyor module, which comprises a housing in which at least a pump, a heater and a sensor is received. The housing has in a bottom region a holder, which is formed by means of it on an inner tank base of the tank which is attached. Furthermore, a suitably prepared tank conveyor module and a production method for such a tank system are specified.

WO 2013/135486 A1 discloses a delivery unit for extracting liquid additive from a tank, which delivery unit can be mounted on the tank, having a fill level sensor for measuring the fill level of liquid additive in the tank, wherein the fill level sensor is set up to emit waves into an emission region of the tank, and the fill level can be measured by means of a propagation time measurement of the waves that are reflected by a liquid surface and strike the fill level sensor again, and wherein the delivery unit has at least a first reference surface which extends at least partially into the emission region and is at a first distance from the fill level sensor, wherein the at least one first reference surface is arranged on a separate calibration component which is mounted on an outer side of a housing of the delivery unit.

An object of the invention is to provide an arrangement with a housing that provides improved conditions especially for an element. The element may be embodied as a sensor or as an actuator.

The object of the invention is attained by the independent claim.

The dependent claims describe further embodiments of the invention.

An advantage of the proposed arrangement with the housing is that an ambient in a chamber of the housing is improved compared to the state of the art with simple means. This is attained by a housing with a chamber for an element. The housing has an opening, wherein the opening connects the chamber with an ambient. Furthermore, a reservoir is connected via a first valve and a line with the chamber. The reservoir is connected via a second valve with the ambient. The reservoir, the first valve and the second valve are embodied to pump air from the ambient through the chamber if a temperature of the reservoir changes. Therefore, the air in the chamber can easily be changed or mixed with air from outside for example with air from the ambient. The air may be natural air from the ambient or air from any kind of air source. The air may be any kind of gas and especially natural air from the ambient.

For changing the air of the chamber, a simple structure is used, wherein automatically the pumping of the air is performed by a change of the temperature of the reservoir. The changing of the air in the chamber prevents a deterioration of the air in the chamber. Depending on the used embodiment, a change of temperature within 5 or 10 degrees Celsius may be sufficient to pump air from the ambient into the chamber.

In a further embodiment, the first valve and/or the second valve are embodied as non-return valves. Therefore, it is not necessary to control the first and/or the second valve.

In a further embodiment, the first valve is a non-return valve and oriented in such a way that flowing of the air is allowed if an air pressure of the chamber is higher than an air pressure of the reservoir. The second valve which is also embodied as a non-return valve is arranged in such a way that flowing of air is allowed if an air pressure of the reservoir is higher than an air pressure of the ambient. A closing force of the first valve is higher than a closing force of the second valve.

In a further embodiment, the first valve is embodied as non-return valve and the first valve is arranged in such a way that flowing of air through the first valve is allowed if an air pressure of the chamber is smaller than an air pressure of the reservoir. Furthermore, the second valve which is also embodied as a non-return valve is arranged in such a way that flowing of air is allowed through the second valve if an air pressure of the reservoir is smaller than an air pressure of the ambient. A closing force of the first valve is smaller than a closing force of the second valve.

In a further embodiment, the use of the housing is improved by a ventilation line which is connected with the opening of the housing.
In a further embodiment, the housing is embodied as a fluid-tight housing. Additionally, a connection between the line and the housing is embodied as a fluid-tight connection. Furthermore, a connection between the ventilation line and the housing is embodied as a fluid-tight connection. This embodiment of the housing provides the possibility to arrange the housing for example within a fluid, wherein the chamber is protected against the fluid by the fluid-tight embodiment of the housing.

In a further embodiment, the opening of the housing is connected with a ventilation line, wherein the line is guided via at least a section of the ventilation line in the chamber. Therefore, it is not necessary to provide a separate opening for the line. This simplifies the structure of the housing and improves the robust design of the housing especially for a fluid-tight embodiment of the housing.

In a further embodiment, a cooling device and/or a heating device are arranged, wherein the cooling device and/or the heating device are in thermal contact with the reservoir. The cooling device can be used for cooling down the temperature of the reservoir and therefore starting or assisting a pumping of air in/or through the chamber of the housing. The heating device can be used for heating up the reservoir and therefore starting and/or assisting a pumping of air in/or through the chamber of the housing.

In a further embodiment, the mixing of air within the housing or the ventilation of fresh air in the chamber of the housing is improved by a specific arrangement of the opening and an ending of the line within the chamber. The ventilation or mixing of fresh air with the air of the chamber is improved by using a large distance between the opening of the housing and the end of the line, for example an as large as possible distance between the opening of the housing and the end of the line. At least the opening of the housing and the ending of the line are arranged in different parts of the chamber.

Depending on the used embodiment, a sensor and/or an actuator and/or an electric component and/or an electronic component is arranged in the chamber. For example the sensor is embodied as a fluid quality sensor. The fluid quality sensor may be embodied as an urea quality sensor. The proposed arrangement is robust against an aggressive environment made of fluid urea.

One of several advantageous arrangements of the housing is the arrangement of the housing within a fluid. The ventilation of the chamber of the housing by the proposed simple means protects any element within the chamber against negative influence caused by the fluid.

This device is especially for advantage in a car for sensing quality of urea, wherein the urea is used for assisting a cleaning function of exhaustion gas of an internal combustion engine of the car.

The invention will be explained in more detail hereinafter with reference to the Figures. In the drawings:
- Fig. 1: shows a schematic view of the arrangement with the housing and the reservoir.
- Fig. 2: shows one embodiment of the reservoir with the first and second valve.
- Fig. 3: shows a second embodiment of the reservoir with the first and the second valve.
- Fig. 4: shows a further arrangement of the arrangement within a fluid tank.
- Fig. 5: shows a further embodiment of the arrangement in a fluid tank.
- Fig. 6: shows a schematic top view of the housing.
- Fig. 7: shows a further embodiment of the reservoir with the valves.

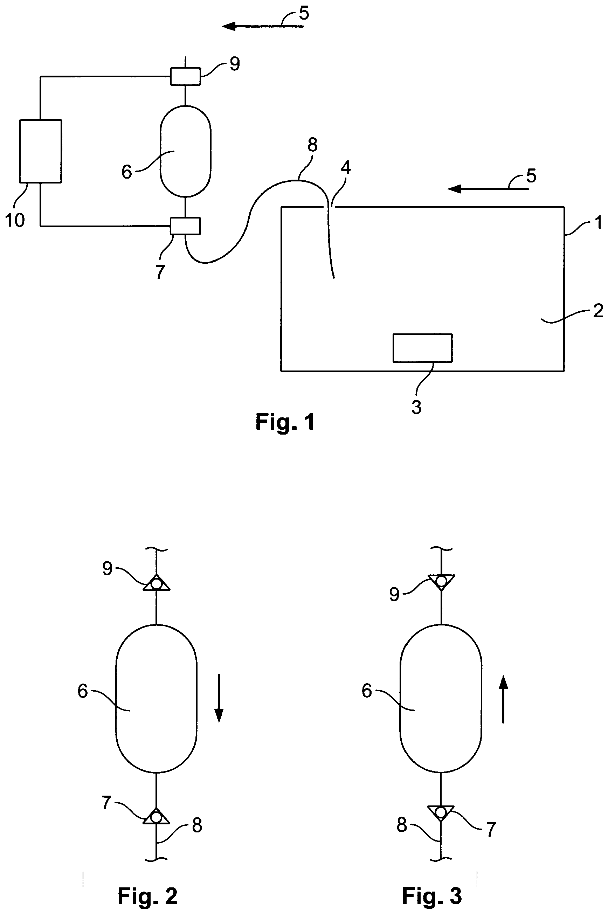

Fig. 1 shows a schematic view of an arrangement with a housing 1 for an element 3. The housing 1 comprises a chamber 2. The chamber 2 may be embodied to arrange an element 3 within the chamber. The element 3 may be a sensor, an actuator, an electric component or an electronic component for example. The housing 1 comprises an opening 4 that connects the chamber 2 with an ambient 5. Furthermore, a reservoir 6 is arranged, wherein the reservoir 6 is connected via a first valve 7 and a line 8 with the chamber 2. In the shown embodiment, the line 8 is guided via the opening 4 in the housing 1 and in the chamber 2. Depending on the used embodiment, the line 8 can be guided through a different opening of the housing 1 in the chamber 2. The reservoir 6 comprises a second valve 9 that connects the reservoir 6 to the ambient 5. The reservoir 6 is an air reservoir. The expression air covers all kinds of air and/or gases. In a furhter embodiment, the second valve 9 may be connected to an air source or gas source. The first and the second valve 7, 9 may be controllable valves or in a preferred embodiment non-return valves.

The reservoir 6 is embodied to change the temperature. Therefore, by changing the temperature of the air within the reservoir 6, the pressure changes. This effect is used for pumping air through or in the chamber 2 of the housing 1. There are basically two different methods possible to pump air in the chamber 2. In the first embodiment, the air is sucked via the second valve 9 in the reservoir 6. This is performed by decreasing the temperature of the reservoir 6 and decreasing the temperature of the air in the reservoir 6. The decrease of the temperature also reduces the pressure of the air in the reservoir 6 to a value smaller than the pressure of the ambient. For example, a usual change of temperature within a day and night of about 5 degrees or 10 degrees can be used to suck air from the ambient 5 via an open second valve 9 in the reservoir 6. During the sucking of the air via the second valve 9, the first valve 7 is closed. Then, when the pressure within the reservoir 6 is the same as the pressure in the ambient 5, the second valve 9 is closed. This is the situation, when the reservoir 6 has a low temperature. This method can for example be performed during the night of a day.

Then, if the temperature of the reservoir 6 increases, which can be performed during the day, the pressure within the reservoir 6 increases to a value higher than the pressure of the ambient and the pressure in the chamber 2 that is connected with the ambient. Then the first valve 7 is opened and the air flows from the reservoir 6 via the first valve 7 and the line 8 to the chamber 2.

The same effect can be used for sucking air from the chamber 2 via the line 8 and the first valve 7 in the reservoir 6 by cooling down the reservoir 6. In this situation, the first valve 7 is opened and the second valve 9 is closed. If air is sucked by the reservoir 6 from the chamber 2, then air flows in the chamber 2 via the opening 4. Then the first valve is closed. After increasing the temperature of the reservoir 6, the air can be released from the reservoir 6 by opening the second valve 9 to the ambient 5. Therefore, two different pumping directions can be used to bring air from the ambient 5 into the chamber 2.

The first and the second valve 7, 9 can be controlled by a control unit 10. The control unit 10 may be embodied to sense a temperature of the reservoir 6 and to open and/or close the first and/or the second valve 7, 9 depending on the temperature of the reservoir 6. However, a simple embodiment of the device can be used by using a first and a second valve 7, 9 that are embodied as non-return valves.

Fig. 2 shows a part of the embodiment of Fig. 1, wherein the first valve 7 and the second valve 9 are embodied as non-return valves. In Fig. 2, the first and the second valve 7, 9 are embodied to suck air from the ambient 5 if the reservoir 6 cools down and pump air from the reservoir 6 via the line 8 to the chamber 2 if the temperature of the reservoir 6 increases. The second valve 9 and the first valve 7 are prestressed in a closing position, for example by different springs. The springs provide closing forces for the first and the second valve 7, 9. The spring force of the first valve 7 is higher than the spring force of the second valve 9. This means that during the sucking of air from the ambient with an open second valve 9, the first valve 7 is closed. This means that the first valve 7 opens at a higher pressure compared to the second valve 9.

The first valve 7 is embodied to open if a pressure of the chamber 2 is lower than a predetermined value of the pressure of the reservoir 6. The second valve 9 is embodied to open if a pressure in the reservoir 6 is a predetermined value lower than an ambient pressure. In this embodiment, the force that holds the first valve 7 in a closed position is higher than a force that holds the second valve 9 in a closed position.

Fig. 3 shows a second embodiment, wherein the air is sucked from the chamber 2 by using two non-return valves 7, 9. The second valve 9 and the first valve 7 are prestressed in a closing position, for example by different springs. The springs provide closing forces for the first and the second valve 7, 9. The spring force of the first valve 7 is smaller than the spring force of the second valve 9. In this embodiment, the first valve 7 is embodied to open if a pressure of the chamber 2 is higher than a predetermined value of the pressure of the reservoir 6. The second valve 9 is embodied to open if a pressure in the reservoir 6 is a predetermined value higher than an ambient pressure. In this embodiment, the force that holds the first valve 7 in a closed position is smaller than the force that holds the second valve 9 in a closed position.

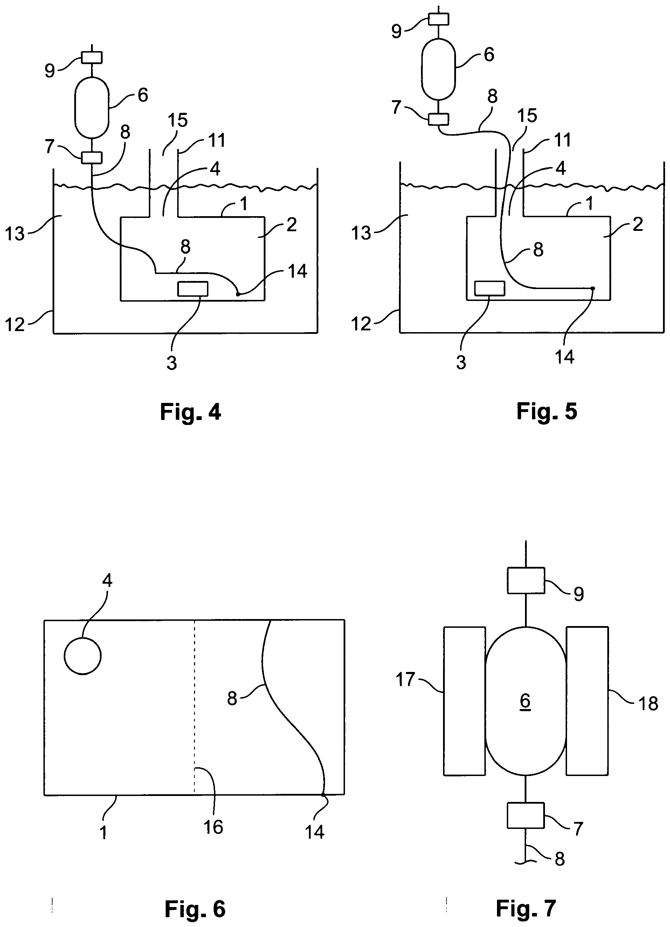

Fig. 4 shows an arrangement of the arrangement with the housing 1, wherein the housing 1 comprises a ventilation line 11 that is connected to the opening 4. The ventilation line 11 is guided a predetermined distance from the opening 4 and an upper side of the housing 1. Furthermore, the reservoir 6 with the first and the second valve 7, 9 are arranged, wherein the line 8 is guided in the chamber 2. The housing 1 is arranged in a fluid tank 12 that is filled with fluid 13. The reservoir 6 is arranged outside the fluid 13. Also an opening 15 of the ventilation line 11 is arranged outside the opening. The housing 1 is embodied as a fluid-tight housing, so no fluid can flow in the chamber 2.

Nevertheless, the fluid may have a negative influence on condition within the chamber 2. For example, a humidity in the chamber 2 can be higher and therefore moisture can be deposited on the element 3. Therefore, it is of advantage to pump or suck air from outside in the chamber 2. This can be attained by the reservoir 6 and the first and the second valves 7, 9, the line 8 and the ventilation line 11. The reservoir 6 and the first and the second valves 7, 9 may be embodied as non-return valves as shown in the Figures 2 and 3 or may be embodied as controllable valves as shown in Fig. 1. Furthermore, the opening 4 of the chamber 2 is arranged in an opposite part compared to an ending 14 of the line 8. This has the advantage that a large space of the chamber 2 is influenced by sucking air via the ventilation line 11 or by pumping air to the ventilation line 11.

Fig. 5 shows a further arrangement of the housing 1 with the reservoir 6 and the first and the second valves 7, 9, wherein the housing 1 is arranged within a fluid 13 in a tank 12. However, in this embodiment, the line 8 is guided via an opening 15 of the ventilation line 11 in the chamber 2. This has the advantage that less openings are necessary to guide the line 8 in the chamber 2 compared to the embodiment of Fig. 4.

Fig. 6 shows a schematic top view on the housing 1, wherein the opening 4 and the ending 14 of the line 8 are arranged in different parts of the chamber 2 with respect to a middle line 16. The middle line 16 is a hypothetical line that divides the chamber 2 into equal parts. As discussed above, it is of advantage for the ventilation of the air within the chamber 2 to arrange the opening 4 and the ending 14 of the line 8 with the largest distance.

The function of the reservoir 6 may be improved by an embodiment that is shown in Fig. 7. Fig. 7 shows an embodiment, wherein a heating device 17 and a cooling device 18 are in contact the reservoir 6. The heating device and/or the cooling device are controllable for example by the control unit 10. Therefore, it is possible to change the temperature of the reservoir 6 without using a natural ambient temperature. Additionally, the heating and/or the cooling device may be used for assisting a natural change of the temperature of the reservoir 6. Depending on the used embodiment, only a cooling device 18 or a heating device 17 is arranged for assisting or for controlling the increasing and/or the decreasing of the temperature of the reservoir 6.

The proposed device can for example be arranged in a car, wherein the tank 12 is an urea tank and the fluid 13 is an urea fluid that is used for cleaning the exhaust gases of an internal combustion engine, for example by an NOx-Reactor.

The line 8 may be embodied as a microcapillary line. The reservoir 6 and the housing 1 may be made of plastic or metal for example. The proposed arrangement can be used for using a natural temperature change between day and night and/or by active heating of the reservoir 6 that provides above a volume of air. The heating device and/or the cooling device may be embodied as electrical heating or electrical cooling devices. Instead of a sensor also an actuator may be arranged as an element 3 within the chamber 2.

Although the invention has been illustrated and described in detail by the preferred exemplary embodiments, the invention is not restricted by the disclosed examples and other variations can be derived therefrom by a person skilled in the art without departing from the protective scope of the appended claims.
In particular, it is conceivable for individual features to be omitted and/or for the features to be arranged in a different way.

## Claims

1. Arrangement with a housing (1) for an element (3) for example a sensor or an actuator, wherein the housing (1) has a chamber (2) for the element, wherein the housing (1) has an opening (4), wherein the opening (4) connects the chamber (2) with an ambient (5), **characterised in that** a reservoir (6) is connected via a first valve (7) and a line (8) with the chamber (2), wherein the reservoir (6) is connected via a second valve (9) with the ambient (5), wherein the reservoir (6), the first valve (7) and the second valve (9) are embodied to pump air from the ambient (5) through the chamber (2) if a temperature of the reservoir (6) changes.

2. The arrangement of claim 1, wherein the first valve (7) is a non-return valve.

3. The arrangement of claim 1 or 2, wherein the second valve (9) is a non-return valve.

4. The arrangement of claim 2 and 3, wherein the first valve (7) allows flowing of air into the reservoir (6) if an air pressure of the chamber (2) is higher than an air pressure of the reservoir (6), and wherein the second valve (9) allows flowing of air if an air pressure of the reservoir (6) is higher than an air pressure of the ambient (5), wherein a closing force of the first valve (7) is higher than a closing force of the second valve (9).

5. The arrangement of claim 2 and 3, wherein the first valve (7) allows flowing of air from the reservoir (6) to the chamber (2) if an air pressure of the chamber (2) is smaller than an air pressure of the reservoir (6), and wherein the second valve (9) allows flowing of air from the ambient (5) into the reservoir (6) if an air pressure of the reservoir (6) is smaller than an air pressure of the ambient (5), wherein a closing force of the first valve (7) is smaller than a closing force of the second valve (9).

6. The arrangement of any one of the preceding claims, wherein the opening (4) of the housing (1) is connected with a ventilation line (11), wherein the housing (1) is fluid tight, and wherein a connection between the line (8) and the housing (1) is fluid tight, and wherein a connection between the ventilation line (11) and the housing (1) is fluid tight.

7. The arrangement of any one of the preceding claims, wherein the opening (4) of the housing (1) is connected with a ventilation line (11), wherein the line (8) is guided via at least a section of the ventilation line (11) in the chamber (2).

8. The arrangement of any one of the preceding claims, wherein a heating device (17) is arranged, wherein the heating device (17) is in thermal contact with the reservoir (6), wherein the heating device (17) is embodied to heat the reservoir (6).

9. The arrangement of any one of the preceding claims, wherein a cooling device (18) is arranged, wherein the cooling device (18) is in thermal contact with the reservoir (6), wherein the cooling device (18) is embodied to cool the reservoir (6).

10. The arrangement of any one of the preceding claims, wherein the chamber (2) has a three-dimensional space, wherein the space has a hypothetical middle plane (16), wherein a first part of the chamber and a second part of the chamber are on opposite sides of the middle plane (16), wherein the opening (4) of the housing is arranged in the first part of the chamber (2), and wherein an ending (14) of the line (8) is arranged in the second part of the chamber (2).

11. The arrangement of any one of the preceding claims, wherein as an element (3) a sensor and/or an actuator and/or an electric component and/or an electronic component are arranged in the chamber.

12. The arrangement of claim 11, wherein the sensor is a fluid quality sensor.

13. The arrangement of claim 12, wherein the sensor is an urea quality sensor.

14. The arrangement of claim 2, 3, 6 and 7, wherein a fluid tank (12) is arranged, wherein fluid (13) is in the fluid tank (12), wherein the housing (1) is in the fluid (13), wherein the reservoir (6) and an ending (15) of the ventilation line (11) are outside the fluid (13).

## Patentansprüche

1. Anordnung mit einem Gehäuse (1) für ein Element (3), beispielsweise einen Sensor oder einen Aktuator, wobei das Gehäuse (1) eine Kammer (2) für das Element aufweist, wobei das Gehäuse (1) eine Öffnung (4) aufweist, wobei die Öffnung (4) die Kammer (2) mit einer Umgebung (5) verbindet,
**dadurch gekennzeichnet, dass** ein Reservoir (6) über ein erstes Ventil (7) und eine Leitung (8) mit der Kammer (2) verbunden ist, wobei das Reservoir (6) über ein zweites Ventil (9) mit der Umgebung (5) verbunden ist, wobei das Reservoir (6), das erste Ventil (7) und das zweite Ventil (9) dazu ausgeführt sind, Luft aus der Umgebung (5) durch die Kammer (2) zu pumpen, wenn sich eine Temperatur des Reservoirs (6) ändert.

2. Anordnung nach Anspruch 1, wobei das erste Ventil (7) ein Rückschlagventil ist.

3. Anordnung nach Anspruch 1 oder 2, wobei das zweite Ventil (9) ein Rückschlagventil ist.

4. Anordnung nach Anspruch 2 und 3, wobei das erste Ventil (7) Strömen von Luft in das Reservoir (6) gestattet, wenn ein Luftdruck der Kammer (2) höher als ein Luftdruck des Reservoirs (6) ist, und wobei das zweite Ventil (9) Strömen von Luft gestattet, wenn ein Luftdruck des Reservoirs (6) höher als ein Luftdruck der Umgebung (5) ist, wobei eine Schließkraft des ersten Ventils (7) höher als eine Schließkraft des zweiten Ventils (9) ist.

5. Anordnung nach Anspruch 2 und 3, wobei das erste Ventil (7) Strömen von Luft aus dem Reservoir (6) in die Kammer (2) gestattet, wenn ein Luftdruck der Kammer (2) kleiner als ein Luftdruck des Reservoirs (6) ist, und wobei das zweite Ventil (9) Strömen von Luft aus der Umgebung (5) in das Reservoir (6) gestattet, wenn ein Luftdruck des Reservoirs (6) kleiner als ein Luftdruck der Umgebung (5) ist, wobei eine Schließkraft des ersten Ventils (7) kleiner als eine Schließkraft des zweiten Ventils (9) ist.

6. Anordnung nach einem der vorhergehenden Ansprüche, wobei die Öffnung (4) des Gehäuses (1) mit einer Entlüftungsleitung (11) verbunden ist, wobei das Gehäuse (1) fluiddicht ist und wobei eine Verbindung zwischen der Leitung (8) und dem Gehäuse (1) fluiddicht ist und wobei eine Verbindung zwischen der Entlüftungsleitung (11) und dem Gehäuse (1) fluiddicht ist.

7. Anordnung nach einem der vorhergehenden Ansprüche, wobei die Öffnung (4) des Gehäuses (1) mit einer Entlüftungsleitung (11) verbunden ist, wobei die Leitung (8) über zumindest einen Abschnitt der Entlüftungsleitung (11) in die Kammer (2) geführt wird.

8. Anordnung nach einem der vorhergehenden Ansprüche, wobei eine Heizvorrichtung (17) angeordnet ist, wobei die Heizvorrichtung (17) in thermischem Kontakt mit dem Reservoir (6) steht, wobei die Heizvorrichtung (17) ausgeführt ist, um das Reservoir (6) zu erwärmen.

9. Anordnung nach einem der vorhergehenden Ansprüche, wobei eine Kühlvorrichtung (18) angeordnet ist, wobei die Kühlvorrichtung (18) in thermischem Kontakt mit dem Reservoir (6) steht, wobei die Kühlvorrichtung (18) ausgeführt ist, um das Reservoir (6) zu kühlen.

10. Anordnung nach einem der vorhergehenden Ansprüche, wobei die Kammer (2) einen dreidimensionalen Raum hat, wobei der Raum eine hypothetische mittlere Ebene (16) aufweist, wobei ein erster Teil der Kammer und ein zweiter Teil der Kammer auf einander gegenüberliegenden Seiten der mittleren Ebene (16) sind, wobei die Öffnung (4) des Gehäuses im ersten Teil der Kammer (2) angeordnet ist, und wobei ein Ende (14) der Leitung (8) im zweiten Teil der Kammer (2) angeordnet ist.

11. Anordnung nach einem der vorhergehenden Ansprüche, wobei als ein Element (3) ein Sensor und/oder ein Aktuator und/oder eine elektrische Komponente und/oder eine elektronische Komponente in der Kammer angeordnet sind.

12. Anordnung nach Anspruch 11, wobei der Sensor ein Fluidqualitätssensor ist.

13. Anordnung nach Anspruch 12, wobei der Sensor ein Harnstoffqualitätssensor ist.

14. Anordnung nach Anspruch 2, 3, 6 und 7, wobei ein Fluidtank (12) angeordnet ist, wobei Fluid (13) im Fluidtank (12) ist, wobei das Gehäuse (1) im Fluid (13) ist, wobei das Reservoir (6) und ein Ende (15) der Entlüftungsleitung (11) außerhalb des Fluids (13) sind.

## Revendications

1. Agencement avec un logement (1) pour un élément (3), par exemple un capteur ou un actionneur, dans lequel le logement (1) a une chambre (2) pour l'élément, dans lequel le logement (1) a une ouverture (4), dans lequel l'ouverture (4) raccorde la chambre (2) à un environnement ambiant (5), **caractérisé en ce qu'**un contenant (6) est raccordé, par l'intermédiaire d'une première vanne (7) et d'une conduite (8), à la chambre (2), dans lequel le contenant (6) est raccordé, par l'intermédiaire d'une seconde vanne (9), à l'environnement ambiant (5), dans lequel le contenant (6) et la première vanne (7) et la seconde vanne (9) sont mis en œuvre pour pomper de l'air à partir de l'environnement ambiant (5) à travers la chambre (2) si une température du contenant (6) change.

2. Agencement selon la revendication 1, dans lequel la première vanne (7) est une vanne de non-retour.

3. Agencement selon la revendication 1 ou 2, dans lequel la seconde vanne (9) est une vanne de non-retour.

4. Agencement selon la revendication 2 et 3, dans lequel la première vanne (7) permet l'écoulement d'air dans le contenant (6) si une pression d'air de la chambre (2) est plus élevée qu'une pression d'air du contenant (6), et dans lequel la seconde vanne (9) permet l'écoulement d'air si une pression d'air du contenant (6) est plus élevée qu'une pression d'air de l'environnement ambiant (5), dans lequel une force de fermeture de la première vanne (7) est plus élevée qu'une force de fermeture de la seconde vanne (9).

5. Agencement selon la revendication 2 et 3, dans lequel la première vanne (7) permet l'écoulement d'air depuis le contenant (6) jusqu'à la chambre (2) si une pression d'air de la chambre (2) est inférieure à une pression d'air du contenant (6), et dans lequel la seconde vanne (9) permet l'écoulement d'air, provenant de l'environnement ambiant (5), dans le contenant (6) si une pression d'air du contenant (6) est inférieure à une pression d'air de l'environnement ambiant (5), dans lequel une force de fermeture de la première vanne (7) est inférieure à une force de fermeture de la seconde vanne (9).

6. Agencement selon l'une quelconque des revendications précédentes, dans lequel l'ouverture (4) du logement (1) est raccordée à une conduite de ventilation (11), dans lequel le logement (1) est étanche aux fluides, et dans lequel un raccordement entre la conduite (8) et le logement (1) est étanche aux fluides, et dans lequel un raccordement entre la conduite de ventilation (11) et le logement (1) est étanche aux fluides.

7. Agencement selon l'une quelconque des revendications précédentes, dans lequel l'ouverture (4) du logement (1) est raccordée à une conduite de ventilation (11), dans lequel la conduite (8) est guidée, par l'intermédiaire d'au moins une section de la conduite de ventilation (11), dans la chambre (2).

8. Agencement selon l'une quelconque des revendications précédentes, dans lequel un dispositif de chauffage (17) est agencé, dans lequel le dispositif de chauffage (17) est en contact thermique avec le contenant (6), dans lequel le dispositif de chauffage (17) est mis en œuvre pour chauffer le contenant (6).

9. Agencement selon l'une quelconque des revendications précédentes, dans lequel un dispositif de refroidissement (18) est agencé, dans lequel le dispositif de refroidissement (18) est en contact thermique avec le contenant (6), dans lequel le dispositif de refroidissement (18) est mis en œuvre pour refroidir le contenant (6).

10. Agencement selon l'une quelconque des revendications précédentes, dans lequel la chambre (2) a un espace tridimensionnel, dans lequel l'espace a un plan médian hypothétique (16), dans lequel une première partie de la chambre et une seconde partie de la chambre sont sur des côtés opposés du plan médian (16), dans lequel l'ouverture (4) du logement est agencée dans la première partie de la chambre (2), et dans lequel une terminaison (14) de la conduite (8) est agencée dans la seconde partie de la chambre (2).

11. Agencement selon l'une quelconque des revendications précédentes, dans lequel, en tant qu'élément (3), un capteur et/ou un actionneur et/ou un composant électrique et/ou un composant électronique sont agencés dans la chambre.

12. Agencement selon la revendication 11, dans lequel le capteur est un capteur de qualité de fluide.

13. Agencement selon la revendication 12, dans lequel le capteur est un capteur de qualité d'urée.

14. Agencement selon la revendication 2, 3, 6 et 7, dans lequel un réservoir de fluide (12) est agencé, dans lequel un fluide (13) est dans le réservoir de fluide (12), dans lequel le logement (1) est dans le fluide (13), dans lequel le contenant (6) et une terminaison (15) de la conduite de ventilation (11) sont à l'extérieur du fluide (13).
